# EUROPEAN PATENT SPECIFICATION

(11) **EP 1 812 360 B1**
(45) Date of publication and mention of the grant of the patent: **20.01.2010**
(21) Application number: 06724995.3
(22) Date of filing: 09.03.2006
(51) Int. Cl.: C04B 38/00, C04B 14/38, C04B 37/00

(54) **METHOD FOR MANUFACTURING COMPOSITE LAMINATED ARTICLES UNDER A VACUUM AND RESULTANT ARTICLES**
VERFAHREN ZUR HERSTELLUNG LAMINIERTER KOMPOSITARTIKEL UNTER VAKUUM UND DAMIT HERGESTELLTE ARTIKEL
PROCEDE DE PRODUCTION D'ARTICLES STRATIFIES COMPOSITES SOUS VIDE ET ARTICLES RESULTANT

(30) Priority: 22.03.2005 IT TV20050043
(43) Date of publication of application: 01.08.2007
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco
(86) International application number: PCT/EP2006/060586
(87) International publication number: WO 2006/100180

(56) References cited:
- WO-A-2005/111126
- US-B1- 6 214 472
- US-B1- 6 886 304

## Description

The present invention relates to a method for manufacturing composite articles comprising at least two sheets which are glued together, the sheets consisting of natural or agglomerate stone, stone-like and/or ceramic material.

Articles consisting of only two sheets are known, e.g. from US 6,214,472,B1 (Barton et al.), where the first sheet has a supporting function and the second sheet has a lining function. The sheets are joined together by placing between their mutually facing sides a continuous layer of adhesive which, after hardening, ensures permanent joining together of the sheets. The support sheet is made using ceramic material or stone or artificial stone-like material, possibly with a low specific weight, and usually has a good mechanical strength. The lining sheet instead consists of natural stone material, for example marble, or artificial stone material, for example that marketed under the tradename Bretonstone®, or ceramic material. In all these cases the lining sheet has a decorative function.

The articles thus obtained have a high mechanical strength and at the same time an attractive visible surface and are usually used to line inner or outer walls or for furnishing components, such as tables or worktops for bathrooms, kitchens, public premises, laboratories, etc.

From the above explanation it can be easily understood that the final quality of these articles is strictly dependent upon the effectiveness of the joint between the sheets. However, despite using as an adhesive resins with notable adhesive properties, for example epoxy, polyurethane or silicone resins, the final result is not always that expected.

It should be considered, in fact, that during the joining step air may easily remain trapped and, after hardening of the resin, forms zones where the two sheets do not adhere to each other, to the detriment, therefore, of the mechanical strength of the final product obtained and with the risk that, over time, separation of the lining sheet may occur.

The object of the present invention is to provide an article comprising a plurality of sheets, and in particular at least one support sheet and at least one lining sheet, which are joined together in an optimum manner without therefore adversely affecting the final properties of the product.

This object is achieved by a method having the characteristic features claimed hereinbelow, so that a paste-like adhesive is placed in a discontinuous manner on at least one of the mutually facing sides of a support sheet and a lining sheet. The zones which are completely or nearly completely devoid of adhesive extend as far as at least one side edge of the sheets and remain so even after one sheet has been arranged on top of the other one. By keeping therefore the sheets resting on top of one other in an environment where there is a vacuum, the abovementioned zones form paths along which all the air left between said surfaces is expelled. After the air has been extracted, by exerting on the sheets a pressure which is sufficiently high to compress the adhesive (obviously without the sheets being deformed), a uniform thickness of adhesive is formed over the entire joining zone, namely the adhesive ends up being spread over the whole surface of the mutually facing sides of the sheets.

Consequently, as a result of the invention, perfect adhesion between the sheets is obtained, without any possibility of air bubbles or pockets remaining trapped inside the joining zone.

In the context of the present invention the term "paste-like adhesive" refers to a substance which is liquid, even though very dense and therefore with a very high dynamic viscosity.

In a preferred embodiment of the invention, said paste-like adhesive has a dynamic viscosity of between 300,000 Mpas and 1,000,000 Mpas and the degree of vacuum created for extraction of the air, before joining together by means of compression, is equal to a residual pressure of between 10 and 80 mbar.

Further advantageous characteristic features of the invention will emerge more clearly from the following detailed description of a few embodiments thereof, provided only by way of a non-limiting illustration, with reference to the accompanying drawings in which:
- Figure 1 is a perspective view of a support sheet to which paste-like adhesive has been applied in accordance with the procedures of the invention;
- Figure 2 is a cross-sectional view of the support sheet according to Figure 1;
- Figure 3 is a side view of a first semi-finished article formed by joining together a support sheet according to Figures 2 and 3 with a lining sheet;
- Figure 4 is a side view of a second semi-finished article consisting of a lining sheet joined on both sides to respective support sheets and two finished products obtained from this semi-finished article.

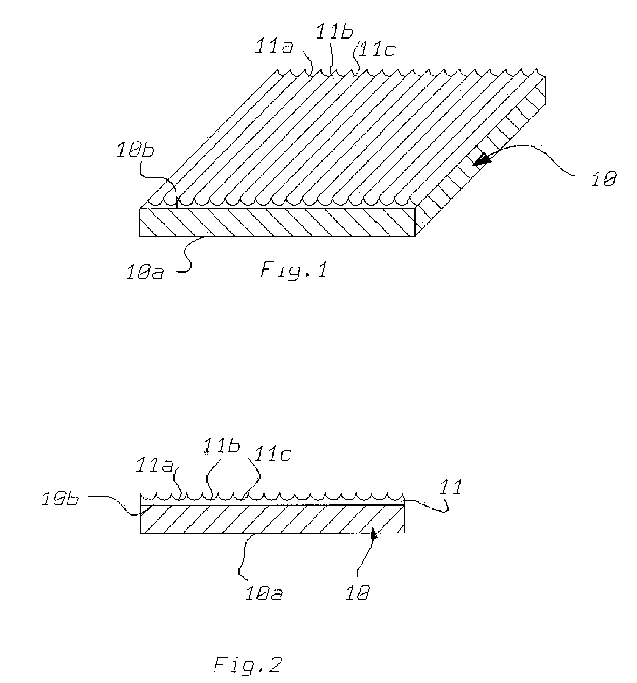

Figures 1 and 2 show a sheet of support material 10 consisting of ceramic material or stone material or artificial stone-like material, for example the material with a low specific weight described and claimed in Italian patent application No. TV2004A000057 in the name of the same Applicants.

The support sheet 10 has a first side or bottom surface 10a and a second side or upper surface 10b. A paste-like adhesive 11 is spread over the upper surface 10b, for example by means of a toothed spatula so that the said paste-like adhesive forms grooves 11 a, 11b, 11c which are parallel to each other and separated by peaks.

With reference to grooves, this is understood as meaning zones where the paste-like adhesive is missing completely or at least has a thickness considerably less than that of the so-called peaks. The grooves shown in the accompanying drawings have a straight arrangement, but obviously other arrangements are possible such as, for example, an undulating arrangement, or a spiral arrangement or an intersecting grid-like arrangement, or other arrangement. It is essential, however, that the distribution of the paste-like adhesive should not be uniform and that the grooves should extend as far as at least one of the edges of the sheet 10.

The paste-like adhesive 11 used may be of a different nature: for example, it may consist of mastic, or a liquid resin with the addition of a filler, or more generally a thixotropic binder.

The paste-like adhesive 11 must be sufficiently dense and viscous to maintain the form of the grooves even after the support sheet 10 and the lining sheet 12 have been placed on top of one another. In particular, it is preferable that the dynamic viscosity of the paste-like adhesive should be greater than 300,000 Mpas and less than 1,000,000 Mpas.

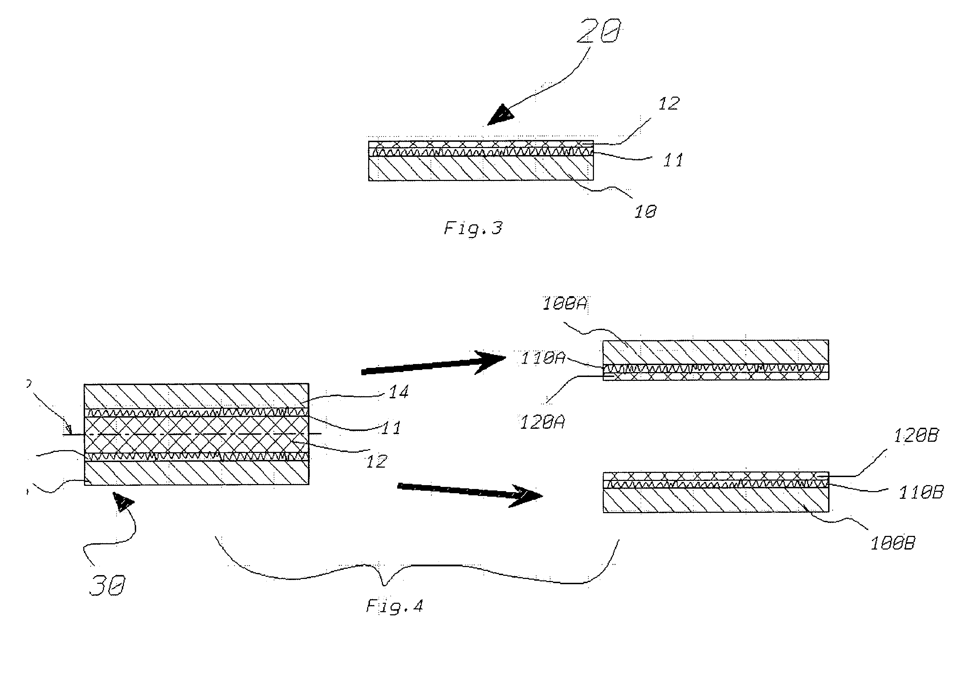

The step in the method following distribution of the paste-like adhesive consists in fact in placing a lining sheet 12 on the support sheet 10 so as to obtain a semi-finished article in which, precisely, the said paste-like adhesive is situated in the joining zone, namely between the mutually facing sides or surfaces of the two sheets (see Figure 3).

In the step after the previous one, said semi-finished article is transferred into an environment where a vacuum having a residual pressure less than 30 mbar is created.

In this way, owing to the degree of vacuum created, the air remaining between the two sheets has the possibility of escaping completely from the joining zone along the paths which, precisely, are formed by the grooves of the adhesive 11 which, as already mentioned, extend as far as at least one of the edges of the support sheet 10.

Following expulsion of the air by the vacuum and therefore still operating with a residual pressure less than the atmospheric pressure, a compressive force corresponding to a pressure preferably higher than 5 N/cm², is applied onto the sheets 10 and 12 for a period of a few seconds, and preferably about 10 seconds. Obviously, the force used and the duration of the compressive step are chosen so as to not to cause any deformation of the two sheets.

In this way, the paste-like adhesive 11 is compressed, ending up filling the grooves 11 a, 11 b, 11c (and eliminating the corresponding peaks) so as to form between the sheets 10 and 12 a uniform layer which is devoid of air bubbles or pockets. In Figure 3 the semi-finished article thus obtained is indicated by the reference number 20.

At the end of the compression step the atmospheric pressure is restored with the introduction of air, so that a suction-cap effect is created between the sheets 10 and 12, with a pressure on the paste-like adhesive equal to about 1 bar. In this situation, the semi-finished article 20 is left to rest for a few hours until hardening of the paste-like adhesive 11 occurs, it being possible to speed up this process, if necessary, by operating in an environment heated to 30-60°C. The article or finished product again having the appearance shown in Figure 3 is thus obtained.

A meshwork consisting of fibres, preferably glass fibres, is embedded in the paste-like adhesive 11 between the sheets 10 and 12. The meshwork has an anti-collapsing function since, in the event of breakage of the article, it prevents any fragments from becoming detached and creating dangerous situations. This characteristic is particularly important where the article is used for cladding external walls or in the event of a earthquake.

It is also possible to produce another semi-finished article, shown in the lefthand part of Figure 4 and indicated by the reference number 30, by joining together with the semi-finished article 20 a second support sheet 14, for example consisting of precious natural marble, when the lining sheet 12 has a sufficiently large thickness. Obviously the second support sheet 14 is applied onto the side of the lining sheet 12 opposite to that joined to the first support sheet 10. The procedures to be followed are the same as those used for joining the lining sheet 12 to the first support sheet 10 and described hereinabove.

At the end, i.e. after hardening of the paste-like adhesive 11, the lining sheet 12 of the semi-finished article 30 is cut along the horizontal centre plane P, thus obtaining two finished products shown in the right-hand part of Figure 4, each product consisting of a support sheet 100A, 100B joined to a lining sheet 120A, 120B by means of the paste-like adhesive 110A, 110B. In a manner known per se, the lining sheet, if it is made of natural stone, is subsequently sized and polished.

In this case, the lining sheet 12 may consist of a stone material, which may also be fragile (for example marble with a thickness between 15 mm and 30 mm, preferably of 20 mm), and the two support sheets 10 and 14 made with a strong material (for example ceramic gres with a thickness between 7 mm and 10 mm, preferably 8 mm) so as to obtain, after the cutting/sizing/polishing operations, two finished products, each consisting of a sheet of marble with a thickness of 5 mm and a sheet of ceramic material with a thickness of 8 mm, in addition to the hardened paste-like adhesive.

Still in accordance with the procedures described, it may also be possible to manufacture more complex articles, namely with a greater number of support sheets and lining sheets.

Although the above description relates to preferred embodiments it is understood that, within the scope of protection of the following claims, other variants of the present invention may be developed. In particular, the grooves may be undulating instead of straight.

## Claims

1. Method for manufacturing composite articles by joining at least one first sheet or support sheet (10, 14) together with a second sheet or lining sheet (12), each of the said sheets having two sides and a plurality of side edges and consisting of natural or artificial stone or stone-like or ceramic material, by placing an adhesive (11) in between, **characterized in that** it comprises the following steps:
- spreading over at least one of the two mutually facing sides of the sheets (10, 12, 14) to be joined together said adhesive (11), which is a hardening paste-like adhesive, in a discontinuous manner, i.e. so as to leave zones which extend as far as at least one edge of the sheets, where said adhesive is substantially missing, at least partially, even after one sheet has been placed on top of the other one;
- arranging one sheet so as to rest on the other one;
- keeping the sheets (10, 12, 14) in an environment inside which a vacuum is created so that all the air left between the sheets under a vacuum is expelled along at least some of the paths formed by the zones where said adhesive is substantially missing;
- still in a vacuum environment, applying onto the sheets (10, 12, 14) a pressure such as to compress the adhesive (11) placed in between so as to form a uniform layer without air bubbles or pockets between the mutually facing sides of the sheets;
- after the atmospheric pressure has been restored, hardening said adhesive (11).

2. Method according to Claim 1, **characterized in that** said zones where the adhesive (11) is substantially missing are in form of grooves (11a, 11b, 11c) separated by peaks.

3. Method according to Claim 2, **characterized in that** said grooves (11a, 11b, 11c) are straight, parallel or intersecting.

4. Method according to Claim 2, **characterized in that** said grooves (11 a, 11b, 11c) are undulating.

5. Method according to any one of the preceding claims, **characterized in that** said paste-like adhesive (11) has a dynamic viscosity of between 300,000 and 1,000,000 Mpas.

6. Method according to Claim 5, **characterized in that** said paste-like adhesive (11) is a mastic or a hardening liquid resin to which a filler is added.

7. Method according to Claim 5, **characterized in that** said paste-like adhesive (11) is a thixotropic binder.

8. Method according to Claim 1, **characterized in that** said vacuum steps are performed at a residual pressure of less than 80 mbar.

9. Method according to Claim 1, **characterized in that** the pressure exerted on said sheets (10, 12, 14) in order to compress the paste-like adhesive (11) placed in between has a value not less than 5 N/cm², but such as not to cause deformation of the sheets.

10. Method according to Claim 1, **characterized in that** the step involving hardening of the said paste-like adhesive takes place at a temperature of between 30 and 60°, preferably higher than 40°C.

11. Method according to any one of the preceding claims, **characterized in that** said first sheet or support sheet (10) is a sheet of conglomerate stone material containing hollow components and having a specific weight less than 1 kg/m³ and said second sheet or lining sheet (12) is a sheet of natural or agglomerate stone material such as marble with a thickness of between 4 mm and 10 mm.

12. Method according to any one of the preceding claims, **characterized in that** a meshwork of fibres or glass fibres or the like, embedded in said paste-like adhesive (11), is provided between the mutually facing sides of the said sheets (10, 12, 14).

13. Method according to any one of the preceding claims, **characterized in that**, after forming a first semi-finished article (20) by joining a first support sheet (10) to a lining sheet (12) with a greater thickness, a second support sheet (14) is joined to said lining sheet (12), on the opposite side, so as to obtain a second semi-finished article (30) and **in that** the lining sheet (12) of said second semi-finished article (30) is then cut along the centre plane (P) so as to obtain two articles each comprising a support sheet (100A, 100B) and a lining sheet (120A,120B).

14. Method according to Claim 13, **characterized in that** said lining sheet (12) is a sheet of natural stone material, such as marble, with a thickness of between 15 mm and 30 mm and said two support sheets (10, 14) are sheets of ceramic material with a thickness of between 7 mm and 10 mm.

## Patentansprüche

1. Verfahren zum Herstellen von Verbundgegenständen durch Fügen zumindest einer ersten Platte oder Stützplatte (10, 14) an eine zweite Platte oder Verkleidungsplatte (12), wobei jede der Platten zwei Seiten und eine Vielzahl an Seitenkanten hat und aus natürlichem oder künstlichem Stein oder steinartigem oder keramischem Material besteht, indem ein Klebemittel (11) zwischen ihnen platziert wird, **dadurch gekennzeichnet, dass** es die folgenden Schritte aufweist:
- Auftragen des Klebemittels (11), welches ein härtendes pastoses Klebemittel ist, über zumindest eine der beiden sich gegenseitig gegenüberliegenden Seiten der aneinander zu fügenden Platten (10, 12, 14) in einer nicht-kontinuierlichen Art und Weise, d.h. dass zumindest teilweise Zonen verbleiben, die sich soweit wie zumindest eine Kante der Platten erstrecken und in denen das Klebemittel im wesentlichen nicht vorhanden ist, auch nachdem eine Platte auf die andere Platte platziert wurde;
- Anordnen eine Platte derart, dass sie auf der anderen ruht;
- Halten der Platten (10, 12, 14) in einer Umgebung, in der ein Unterdruck erzeugt wird, so dass die gesamte zwischen den Platten verbliebene Luft bei dem Unterdruck zumindest entlang von einigen der Pfade ausgelassen wird, die durch die Zonen gebildet sind, in denen das Klebemittel im wesentlichen nicht vorhanden ist;
- Aufbringen eines Drucks auf die Platten (10, 12, 14) weiterhin in einer Unterdruckumgebung, um so das dazwischen platzierte Klebemittel (11) zu komprimieren, um so eine einheitliche Lage ohne Luftblasen oder Taschen zwischen den sich gegenseitig gegenüberliegenden Seiten der Platten zu erzeugen;
- Härten des Klebemittels (11), nachdem der Atmosphärendruck wiederhergestellt wurde.

2. Verfahren gemäß Anspruch 1, **dadurch gekennzeichnet, dass** die Zonen, in denen das Klebemittel (11) im wesentlichen nicht vorhanden ist, die die Form von Nuten (11a, 11b, 11c) haben, die durch Spitzen getrennt sind.

3. Verfahren gemäß Anspruch 2, **dadurch gekennzeichnet, dass** die Nuten (11a, 11b, 11c) gerade oder parallel sind oder sich schneiden.

4. Verfahren gemäß Anspruch 2, **dadurch gekennzeichnet, dass** die Nuten (11a, 11b, 11c) wellig sind.

5. Verfahren gemäß einem der vorherigen Ansprüche, **dadurch gekennzeichnet, dass** das pastose Klebemittel (11) eine dynamische Viskosität zwischen 300.000 und 1.000.000 MPas hat.

6. Verfahren gemäß Anspruch 5, **dadurch gekennzeichnet, dass** das pastose Klebemittel (11) ein Kit oder ein härtendes Flüssigharz ist, dem ein Füllmittel zugefügt ist.

7. Verfahren gemäß Anspruch 5, **dadurch gekennzeichnet, dass** das pastose Klebemittel (11) ein thixotropischer Binder ist.

8. Verfahren gemäß Anspruch 1, **dadurch gekennzeichnet, dass** die Unterdruckschritte bei einem Restdruck von weniger als 80 mbar durchgeführt werden.

9. Verfahren gemäß Anspruch 1, **dadurch gekennzeichnet, dass** der auf die Platten (10, 12, 14) ausgeübte Druck zum Komprimieren des dazwischen platzierten pastosen Klebemittels (11) einen Wert hat, der nicht kleiner ist als 5 N/cm², aber derart, dass keine Verformung der Platten verursacht wird.

10. Verfahren gemäß Anspruch 1, **dadurch gekennzeichnet, dass** der Schritt, bei dem das Härten des pastosen Klebemittels involviert ist, bei einer Temperatur zwischen 30 und 60°, und vorzugsweise bei mehr als 40°C stattfindet.

11. Verfahren gemäß einem der vorherigen Ansprüche, **dadurch gekennzeichnet, dass** die erste Platte oder Stützplatte (10) eine Platte eines Steinmischmaterials ist, das hohle Komponenten enthält und eine spezifische Masse von weniger als 1 kg/m³ hat, und wobei die zweite Platte oder Verkleidungsplatte (12) eine Platte aus natürlichem oder geballtem Steinmaterial wie zum Beispiel Marmor mit einer Dicke zwischen 4 mm und 10 mm ist.

12. Verfahren gemäß einem der vorherigen Ansprüche, **dadurch gekennzeichnet, dass** ein Maschenwerk aus Fasern oder Glasfasern oder dergleichen, die in dem pastosen Klebemittel (11) eingebettet sind, zwischen den sich gegenseitig gegenüberliegenden Seiten der Platten (10, 12, 14) vorgesehen wird.

13. Verfahren gemäß einem der vorherigen Ansprüche, **dadurch gekennzeichnet, dass** nach dem Erzeugen eines ersten halbfertigen Gegenstands (20) durch Fügen einer ersten Stützplatte (10) an eine Verkleidungsplatte (12) mit einer größeren Dicke eine zweite Stützplatte (14) an die Verkleidungsplatte (12) an der entgegengesetzten Seite gefügt wird, um so einen zweiten halbfertigen Gegenstand (30) zu erhalten, und dass die Verkleidungsplatte (12) des zweiten halbfertigen Gegenstands (30) dann entlang der Mittelebene (P) geschnitten wird, um so zwei Gegenstände zu erhalten, die jeweils eine Stützplatte (100A, 100B) und eine Verkleidungsplatte (120A, 120B) aufweisen.

14. Verfahren gemäß Anspruch 13, **dadurch gekennzeichnet, dass** die Verkleidungsplatte (12) eine Platte aus natürlichem Steinmaterial wie zum Beispiel Marmor mit einer Dicke zwischen 15 mm und 30 mm ist, und wobei die beiden Stützplatten (10, 14) Platten aus keramischem Material mit einer Dicke zwischen 7 mm und 10 mm sind.

## Revendications

1. Procédé de fabrication d'articles composites en attachant ensemble au moins une première feuille ou feuille de support (10, 14) et une seconde feuille ou feuille de garnissage (12), chacune desdites feuilles ayant deux côtés et une pluralité de bords latéraux et consistant en un matériau de céramique ou de type pierre ou de pierre artificielle ou naturelle, en plaçant un adhésif (11) entre elles, **caractérisé en ce qu'**il comprend les étapes suivantes :
- l'étalement sur au moins l'un des deux côtés des feuilles (10, 12, 14) se faisant mutuellement face à attacher ensemble dudit adhésif (11), qui est un adhésif de type pâte de durcissement, de manière discontinue, à savoir de sorte à laisser des zones qui s'étendent jusqu'à au moins un bord des feuilles, où ledit adhésif est sensiblement manquant, au moins partiellement, même après qu'une feuille a été placée au-dessus d'une autre ;
- l'agencement d'une feuille de sorte à reposer sur l'autre ;
- le maintien des feuilles (10, 12, 14) dans un environnement à l'intérieur duquel un vide est créé de sorte que la totalité de l'air laissé entre les feuilles sous un vide est expulsée le long d'au moins certains des chemins formés par les zones où ledit adhésif est sensiblement manquant ;
- toujours dans un environnement sous vide, l'application sur les feuilles (10, 12, 14) d'une pression de sorte à comprimer l'adhésif (11) placé entre elles, de sorte à former une couche uniforme sans bulle ou poche d'air entre les côtés des feuilles se faisant mutuellement face ;
- après que la pression atmosphérique a été restaurée, le durcissement dudit adhésif (11).

2. Procédé selon la revendication 1, **caractérisé en ce que** lesdites zones où l'adhésif (11) est sensiblement manquant sont sous la forme de rainures (11a, 11b, 11c) séparées par des pics.

3. Procédé selon la revendication 2, **caractérisé en ce que** lesdites rainures (11a, 11b, 11c) sont droites, parallèles ou intersectées.

4. Procédé selon la revendication 2, **caractérisé en ce que** lesdites rainures (11a, 11b, 11c) sont ondulantes.

5. Procédé selon l'une quelconque des revendications précédentes, **caractérisé en ce que** ledit adhésif de type pâte (11) a une viscosité dynamique comprise entre 300 000 et 1 000 000 Mpas.

6. Procédé selon la revendication 5, **caractérisé en ce que** ledit adhésif de type pâte (11) est un mastic ou une résine liquide de durcissement à laquelle est ajoutée une charge.

7. Procédé selon la revendication 5, **caractérisé en ce que** ledit adhésif de type pâte (11) est un liant thixotrope.

8. Procédé selon la revendication 1, **caractérisé en ce que** lesdites étapes de vide sont réalisées à une pression résiduelle inférieure à 80 mbar.

9. Procédé selon la revendication 1, **caractérisé en ce que** la pression exercée sur lesdites feuilles (10, 12, 14) afin de comprimer l'adhésif de type pâte (11) placé entre elles a une valeur non inférieure à 5 N/cm², mais telle à ne pas entraîner de déformation des feuilles.

10. Procédé selon la revendication 1, **caractérisé en ce que** l'étape impliquant le durcissement dudit adhésif de type pâte a lieu à une température comprise entre 30 et 60°, de préférence supérieure à 40 °C.

11. Procédé selon l'une quelconque des revendications précédentes, **caractérisé en ce que** ladite première feuille ou feuille de support (10) est une feuille de matériau de pierre conglomérée contenant des composants creux et ayant une masse spécifique inférieure à 1 kg/m³ et ladite deuxième feuille ou feuille de garnissage (12) est une feuille de matériau de pierre naturelle ou agglomérée telle que le marbre ayant une épaisseur comprise entre 4 mm et 10 mm.

12. Procédé selon l'une quelconque des revendications précédentes, **caractérisé en ce qu'**un travail de mailles de fibres ou fibres de verre ou similaire, intégré dans ledit adhésif de type pâte (11), est prévu entre les côtés desdites feuilles (10, 12, 14) se faisant mutuellement face.

13. Procédé selon l'une quelconque des revendications précédentes, **caractérisé en ce que**, après la formation d'un premier article semai-fini (20) en attachant une première feuille de support (10) à une feuille de garnissage (12) ayant une épaisseur supérieure, une deuxième feuille de support (14) est attachée à ladite feuille de garnissage (12), sur le côté opposé, de sorte à obtenir un deuxième article semi-fini (30) et **en ce que** la feuille de garnissage (12) dudit deuxième article semi-fini (30) est ensuite découpée le long du plan central (P) de sorte à obtenir deux articles comprenant chacun une feuille de support (100A, 100B) et une feuille de garnissage (120A, 120B).

14. Procédé selon la revendication 13, **caractérisé en ce que** ladite feuille de garnissage (12) est une feuille de matériau de pierre naturelle, telle que le marbre, ayant une épaisseur comprise entre 15 mm et 30 mm et lesdites deux feuilles de support ( 10, 14) sont des feuilles de matériau céramique ayant une épaisseur comprise entre 7 mm et 10 mm.
